# FASCICULE DE BREVET EUROPEEN

(11) **EP 2 537 710 B1**
(45) Date de publication et mention de la délivrance du brevet: **14.05.2014**
(21) Numéro de dépôt: 12173187.1
(22) Date de dépôt: 22.06.2012
(51) Int. Cl.: B60R 7/06, E05B 17/00, E05C 19/02

(54) **Dispositif de rangement pour véhicule automobile comprenant des moyens de verrouillage empêchant une ouverture involontaire du dispositif**
Vorrichtung zum Verstauen für Kraftfahrzeug, mit Verriegelungsmitteln zur Vermeidung des versehentlichen Öffnens der Vorrichtung
Stowing device for amotor vehicle comprising a locking means preventing accidental opening of the device

(30) Priorité: 23.06.2011 FR 1155557
(43) Date de publication de la demande: 26.12.2012
(73) Titulaire: Faurecia Intérieur Industrie, 92000 Nanterre (FR)
(72) Inventeur: Bouldron, Ludovic, 95300 PONTOISE (FR); Byszewski, Gilles, 95290 L'ISLE ADAM (FR)
(74) Mandataire: Domenego, Bertrand

(56) Documents cités:
- DE-A1- 19 944 051
- DE-U1-202011 001 347
- FR-A1- 2 935 320

## Description

La présente invention concerne un dispositif de rangement intérieur pour véhicule automobile du type comprenant un corps de rangement, délimitant un espace de rangement accessible au travers d'une ouverture, et un couvercle mobile entre une position ouverte, dans laquelle l'espace de rangement est accessible, et une position fermée, dans laquelle le couvercle obture l'ouverture, en passant par une position partiellement ouverte dans laquelle le couvercle est rabattu sur le corps de rangement en laissant un passage vers l'espace de rangement, ledit dispositif comprenant un dispositif d'ouverture mobile entre une position d'ouverture, dans laquelle le couvercle est dans la position partiellement ouverte, et une position de fermeture, dans laquelle le couvercle est maintenu dans sa position fermée.

Le dispositif de rangement selon l'invention est par exemple un boîte à gant de véhicule automobile.

Dans un tel dispositif de rangement, un des dispositifs d'ouverture connus est un mécanisme d'actionnement par pression permettant le passage de la position fermée à la position ouverte et le blocage du couvercle dans la position fermée par simple pression sur le couvercle. Un tel mécanisme est connu sous le terme mécanisme « push-push », car le déverrouillage, aussi bien que le verrouillage, du couvercle se fait par l'application d'une pression sur le couvercle. Un tel dispositif d'ouverture est particulièrement esthétique puisqu'il ne nécessite pas la présence d'un organe d'actionnement visible sur le couvercle, tel qu'une poignée ou un bouton ou autre. Ainsi, la surface du couvercle peut être sensiblement identique à l'élément de garnissage, sur lequel le dispositif de rangement est monté (par exemple une planche de bord de véhicule automobile), ce qui améliore l'intégration de ce dispositif de rangement. Le document FR 2 935 320 divulgue un dispositif de rangement d'après le préambule de la revendication 1.

Cependant, un tel dispositif d'ouverture n'est pas particulièrement robuste, notamment pour ce qui est du maintien du couvercle en position fermée. En effet, dans un mécanisme d'actionnement par pression, le maintien du couvercle en position fermée se fait par exemple par la coopération d'une pince et d'un pion prévus respectivement sur le corps de rangement et le couvercle, le passage de la pince de la position fermée à la position ouverte et inversement se faisant par pression du pion sur la pince. Ainsi, dès lors qu'une force supérieure à un certain seuil est appliquée sur le couvercle, cette force déclenche l'ouverture de la pince et la libération du couvercle par rapport au corps de rangement. Un tel déclenchement peut être dangereux s'il n'est pas volontaire. Par exemple en cas de choc contre le véhicule, il est possible que le couvercle soit libéré sous l'effet de forces appliquées sur le couvercle, ce qui peut entraîner l'éjection et la projection du contenu de l'espace de rangement dans l'habitacle du véhicule. Un tel dispositif d'ouverture n'est donc pas sûr du point de vue de la sécurité des passagers du véhicule automobile.

Il est également possible qu'un occupant du véhicule appuie par inadvertance sur le couvercle, entraînant ainsi sa libération. Le couvercle peut alors être ouvert de façon involontaire, ce qui n'est pas satisfaisant.

L'un des buts de l'invention est de pallier ces inconvénients en proposant un dispositif de rangement comprenant un dispositif d'ouverture invisible de l'extérieur du dispositif lorsque le couvercle est fermé et empêchant une ouverture involontaire du couvercle.

A cet effet, l'invention concerne un dispositif de rangement du type précité, dans lequel le dispositif de rangement comprend en outre des moyens de verrouillage mobiles entre une position de verrouillage, dans lesquels lesdits moyens de verrouillage empêchent le passage du couvercle de la position partiellement ouverte à la position ouverte, et une position de déverrouillage, dans laquelle les moyens de verrouillage permettent le passage du couvercle vers la position ouverte, un organe d'actionnement permettant de faire passer lesdits moyens de verrouillage de leur position de verrouillage à leur position de déverrouillage lorsque ledit organe d'actionnement est actionné.

Ainsi, le dispositif de rangement selon l'invention comprend un dispositif d'ouverture qui peut être actionné sans organe d'actionnement et des moyens de verrouillage qui empêchent l'ouverture involontaire du couvercle, ces moyens devant être actionnés par un organe d'actionnement. Ainsi, il est impossible d'ouvrir le couvercle de façon involontaire, alors qu'il est possible de masquer l'organe d'actionnement de sorte à ce qu'il soit invisible lorsque le couvercle est fermé.

Selon d'autres caractéristiques du dispositif de rangement selon l'invention :
- les moyens de verrouillage empêchent le passage du couvercle de la position fermée à la position ouverte ;
- l'organe d'actionnement s'étend entre le couvercle et le corps de rangement de sorte que ledit organe d'actionnement est masqué par le couvercle et inaccessible depuis l'extérieur du dispositif de rangement lorsque le couvercle est en position fermée et est accessible depuis l'extérieur du dispositif de rangement lorsque le couvercle est en position partiellement ouverte ;
- le dispositif d'ouverture comprend un logement disposé dans le couvercle ou dans le corps de rangement, une pince étant mobile en translation dans ledit logement entre une position ouverte, dans laquelle les mors de la pince sont écartés, et une position fermée, dans laquelle les mors de la pince sont rapprochés, et un pion solidaire respectivement du corps de rangement ou du couvercle, le pion étant retenu entre les mors de la pince dans la position fermée de ladite pince, le passage de la position fermée à la position ouverte et de la position ouverte à la position fermée de la pince se faisant par pression du pion sur la pince de sorte à déplacer ladite pince en translation dans le logement ;
- le dispositif de rangement comprend un organe de rappel élastique agencé pour ramener les moyens de verrouillage en position de verrouillage lorsque l'organe d'actionnement n'est pas actionné ;
- le dispositif de rangement comprend en outre une pièce poussoir disposée entre le couvercle et le corps de rangement, ladite pièce étant mobile entre une position rétractée et une position extraite dans laquelle la pièce poussoir maintient le couvercle dans la position partiellement ouverte ;
- le dispositif de rangement comprend un organe de poussée agencé pour pousser la pièce poussoir vers sa position extraite lorsque le couvercle passe de sa position fermée à sa position partiellement ouverte ;
- l'organe de rappel élastique et l'organe de poussée sont formés par une seule et même pièce élastiquement déformable ;
- les moyens de verrouillage comprennent au moins un élément de retenue solidaire du corps de rangement et un élément de blocage monté en rotation sur le couvercle, ledit élément de blocage coopérant avec l'élément de retenue en position de verrouillage et étant écarté dudit élément de retenue en position de déverrouillage ;
- l'organe de rappel élastique est monté autour de l'axe de rotation de l'élément de blocage et comprend une première partie extrême en appui sur une surface du couvercle de sorte à ramener l'élément de blocage en position de verrouillage et une deuxième partie extrême en appui sur la pièce poussoir de sorte à pousser celle-ci vers sa position extraite ; et
- le dispositif de rangement comprend un élément d'obturation saillant dans l'espace de rangement, ledit élément d'obturation étant agencé pour obturer le passage vers l'espace de rangement lorsque le couvercle est dans la position partiellement ouverte.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'un dispositif de rangement selon l'invention selon un premier plan de coupe, le couvercle étant en position fermée,
- la Fig. 2 est une représentation schématique en coupe du dispositif de rangement de la Fig. 1, selon un deuxième plan de coupe,
- la Fig. 3 est une représentation schématique en coupe du dispositif de rangement de la Fig. 1 selon le premier plan de coupe, le couvercle étant en position partiellement ouverte,
- la Fig. 4 est une représentation schématique en coupe du dispositif de rangement de la Fig. 1 selon le premier plan de coupe, l'organe d'actionnement étant actionné pour faire passer le couvercle en position ouverte,
- la Fig. 5 est une représentation schématique en coupe du dispositif de rangement de la Fig. 1 selon le premier plan de coupe, le couvercle étant en position ouverte, et
- la Fig. 6 est une représentation schématique en coupe d'un dispositif de rangement selon une variante de réalisation de l'invention, le couvercle étant en position partiellement ouverte.

Dans la description, les termes « avant » et « arrière » sont définis selon les directions usuelles d'un véhicule automobile monté. Le terme « longitudinal » est défini selon la longueur du véhicule, c'est-à-dire selon une direction avant-arrière et le terme « transversal » est défini selon la largeur du véhicule, c'est-à-dire selon une direction horizontale sensiblement perpendiculaire à la direction longitudinale.

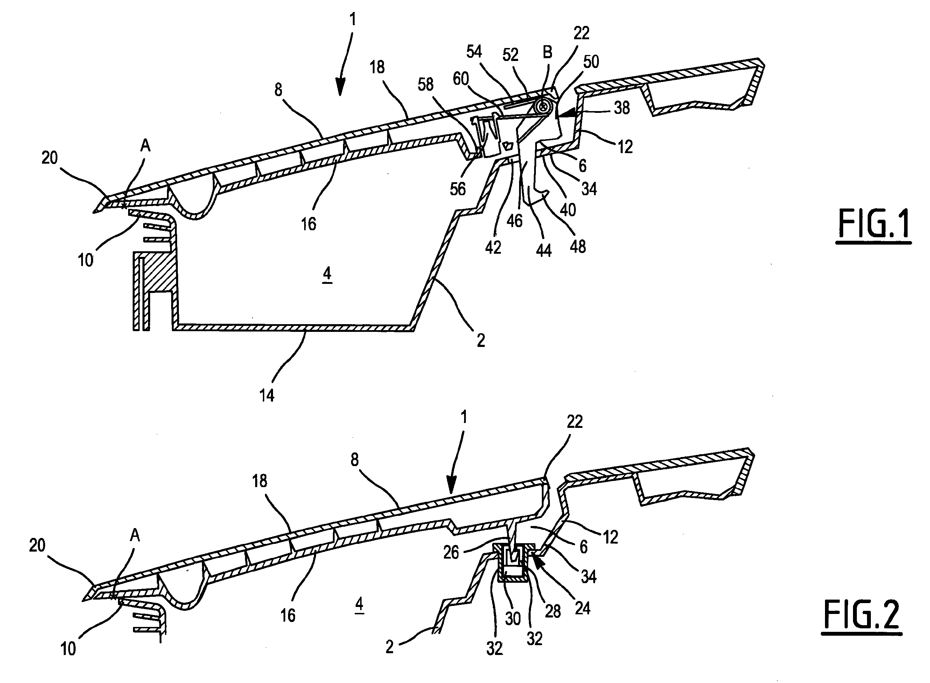

En référence à la Fig. 1, on décrit un dispositif de rangement 1 intérieur pour véhicule automobile, par exemple du type boîte à gant, comprenant un corps de rangement 2, délimitant un espace de rangement 4 accessible au travers d'une ouverture 6, fermée par un couvercle 8. Le dispositif de rangement 1 est par exemple destiné à être intégré à une planche de bord (non représentée) de véhicule automobile. Le dispositif de rangement 1 représenté sur les figures est particulièrement adapté pour être disposé au-dessus et en avant des indicateurs de vitesse et autres de la planche de bord.

Le corps de rangement 2 est délimité par un bord transversal avant 10 et un bord transversal arrière 12, reliés l'un à l'autre par deux parois longitudinales (non représentées) espacées l'une de l'autre selon la direction transversale et reliées par un fond 14. Les bords transversaux 10 et 12, les parois longitudinales et le fond 14 délimitent l'espace de rangement 4, comme représenté sur la Fig. 1.

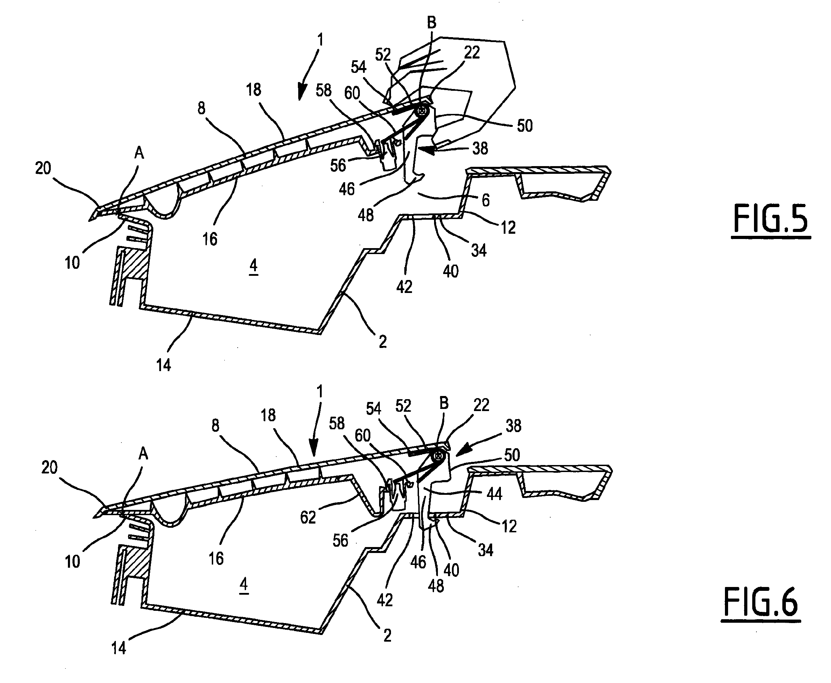

Le couvercle 8 est monté en rotation sur le corps de rangement 2 autour d'un axe transversal A s'étendant au voisinage du bord transversal avant 10 dudit corps 2. Le couvercle 8 est ainsi mobile entre une position fermée, représentée sur les Fig. 1 et 2, dans laquelle il recouvre le corps de rangement 2 de sorte à obturer l'ouverture 6 et à fermer l'espace de rangement 4, et une position ouverte, représentée sur la Fig. 5, dans laquelle l'espace de rangement 4 est accessible par l'ouverture 6. Le couvercle 8 comprend une paroi interne 16 s'étendant en regard du fond 14 et une paroi externe 18 de garnissage destinée à s'étendre dans l'habitacle du véhicule automobile, par exemple dans la continuité de la planche de bord. Les paroi interne 16 et externe 18 s'étendent entre un bord transversal avant 20, disposé en regard du bord transversal avant 10 du corps 2, un bord transversal arrière 22, disposé en regard du bord transversal arrière 12 du corps 2, et deux bords longitudinaux, s'étendant en regard des parois longitudinales du corps 2.

Le dispositif de rangement 1 comprend un dispositif d'ouverture 24 plus particulièrement représenté sur la Fig. 2. Le dispositif d'ouverture 24 est du type à actionnement par pression ou « push-push ». Il comprend par exemple un pion 26 solidaire du couvercle 8 et saillant vers le corps de rangement 2, selon une direction sensiblement perpendiculaire au couvercle 8, et un logement 28 de retenue du pion 26 prévu dans le corps de rangement 2 en regard du pion 26. Une pince 30 est montée en translation à l'intérieur du logement 28 entre une position de fermeture, dans laquelle les mors 32 de la pince sont rapprochés l'un de l'autre et coopèrent avec le pion 26 de sorte à le retenir dans le logement 28, et une position d'ouverture dans laquelle les mors 32 sont séparés l'un de l'autre et laisse le pion 26 libre de sorte que le couvercle 8 peut est déplacé par rapport au corps de rangement 2. En position de fermeture, les mors 32 sont maintenus rapprochés l'un de l'autre par la paroi du logement 28, tandis qu'en position d'ouverture, la pince 30 sort du logement 28 de sorte à libérer les mors 32 et à permettre leur écartement. L'actionnement en translation se fait par une pression du pion 26 sur la pince 30, c'est-à-dire entre les mors 32, aussi bien pour passer de la position de fermeture à la position d'ouverture que de la position d'ouverture à la position de fermeture. Un tel actionnement est connu et ne sera pas décrit en détail ici. Les documents FR-2 622 244, EP-1 596 030 ou US-5 984 381 décrivent par exemple différents modes de réalisation d'un tel dispositif d'ouverture 24 par pression.

Le pion 26 est par exemple prévu au voisinage du bord transversal arrière 22 du couvercle 8, près d'un des bords longitudinaux du couvercle 8 et le logement 28 est par exemple formé sur un épaulement 34 du corps de rangement 2, s'étendant longitudinalement vers le bord transversal arrière 12 du corps de rangement 2. Selon un mode de réalisation, le couvercle 8 comprend deux pions 26 et le corps de rangement comprend deux logements 28, disposés de part et d'autre de l'espace de rangement 4 selon la direction transversale. Selon un autre mode de réalisation, le pion 26 est solidaire du corps de rangement 2 et le logement est pratiqué dans le couvercle 8.

Un tel dispositif d'ouverture 24 est donc actionné en exerçant une pression sur la paroi externe 18 du couvercle 8 au voisinage du bord transversal arrière 22 du couvercle 8 de sorte que le pion 26 agisse sur la pince 30 pour passer de la position de fermeture à la position d'ouverture ou de la position d'ouverture à la position de fermeture. Le fait de pouvoir actionner le dispositif d'ouverture 24 par pression sur la paroi externe 18 du couvercle 8 permet de se passer d'un organe d'actionnement, par exemple du type poignée ou bouton, sur le couvercle 8 et d'améliorer ainsi l'aspect externe du dispositif de rangement 1. En effet, lorsque le couvercle 8 est fermé, la surface externe 18 est sensiblement lisse et s'étend sensiblement dans la continuité de l'élément de garnissage dans lequel le dispositif de rangement 1 est intégré, comme représenté sur les Fig. 1 et 2.

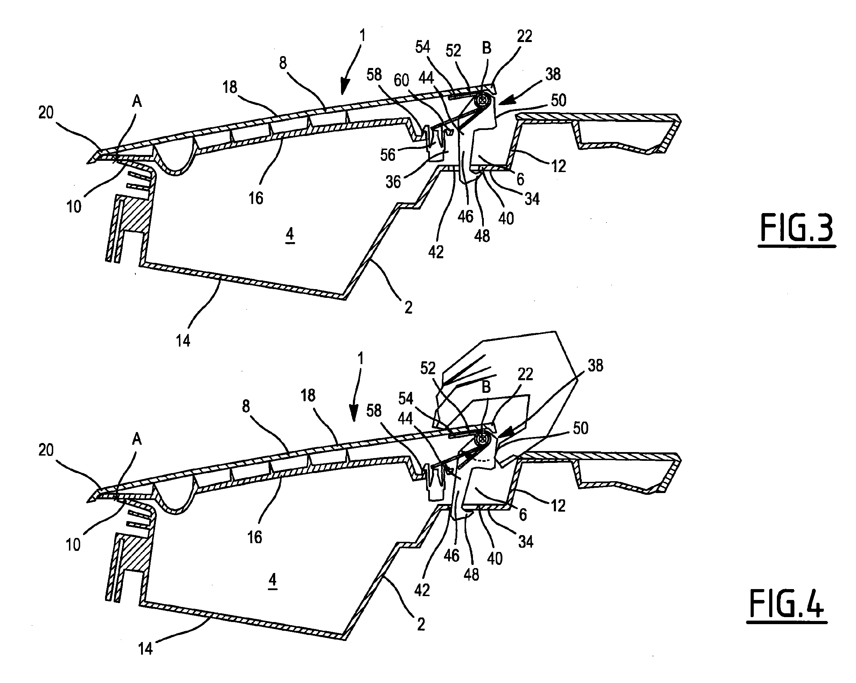

Dans sa position de fermeture, le dispositif d'ouverture 24 maintient le couvercle dans sa position fermée, tandis que dans sa position d'ouverture, le dispositif d'ouverture 24 permet le passage du couvercle 8 de la position fermée à une position partiellement ouverte (Fig. 3 et 4), comme cela va être décrit ultérieurement.

En position partiellement ouverte, le couvercle 8 est rabattu sur le corps de rangement 2 sans que le dispositif d'ouverture 24 soit dans sa position de fermeture, c'est-à-dire qu'en position partiellement ouverte, le pion 26 ne coopère pas avec la pince 30. Dans cette position, le couvercle 8 est légèrement soulevé par rapport au corps de rangement 2, c'est-à-dire que le couvercle 8 a subi une rotation autour de l'axe A entre la position de fermeture et la position partiellement ouverte, de sorte que le bord transversal arrière 22 du couvercle est surélevé par rapport au bord de l'élément de garnissage dans lequel le dispositif de rangement est intégré et par rapport transversal avant 20 du couvercle et de sorte qu'un passage 36 vers l'espace de rangement 4 est dégagé entre le couvercle 8 et le corps de rangement 2, comme représenté sur les Fig. 3 et 4.

Le dispositif de rangement 1 comprend des moyens de verrouillage 38 du couvercle 8 empêchant le passage du couvercle 8 de la position fermée ou partiellement ouverte à la position ouverte. Les moyens de verrouillage 38 comprennent au moins un élément de retenue 40 solidaire du corps de rangement 2, au voisinage du bord transversal arrière 12 de celui-ci. L'élément de retenue 40 est formé par le bord d'une ouverture 42 pratiquée dans le décrochement 34 du corps de rangement 2.

Les moyens de verrouillage 38 comprennent en outre un élément de blocage 44 monté mobile en rotation autour d'un axe transversal B dans le couvercle 8. L'élément de blocage 44 comprend une patte 46 saillant du couvercle 8 vers le corps de rangement 2, selon une direction sensiblement perpendiculaire au couvercle 8 et portant à son extrémité libre une tête 48 en forme de crochet. L'élément de blocage 44 est mobile entre une position de verrouillage (Fig. 1 et 3) et une position de déverrouillage (Fig. 4). Dans la position de verrouillage, si le couvercle 8 est en position fermée, la patte 46 passe par l'ouverture 42 pratiquée dans le corps de rangement 2 de sorte que la tête 48 s'étend au-delà de l'épaulement 34 par rapport au couvercle. Toujours dans la position de verrouillage, si le couvercle 8 est en position partiellement ouverte, la patte 46 est sortie de l'ouverture 42 et le crochet formé par la tête 48 coopère avec l'élément de retenue 40 de sorte à empêcher le couvercle 8 de s'ouvrir au-delà de la position partiellement ouverte. Dans la position de déverrouillage, la patte 46 est tournée de sorte à permettre le passage de la tête 48 par l'ouverture 42 et à libérer le couvercle 8 pour le permettre de passer à sa position ouverte, représentée sur la Fig. 5.

On comprend donc que le couvercle 8 ne peut passer dans sa position ouverte que si l'élément de blocage 44 est dans sa position de déverrouillage. Les moyens de verrouillage 38 permettent donc d'empêcher l'ouverture involontaire du couvercle 8, tant qu'ils sont en position de verrouillage. En effet, même si une pression involontaire est exercée sur le couvercle 8, entraînant le passage du dispositif d'ouverture 24 à sa position d'ouverture, le couvercle 8 sera retenu dans sa position partiellement ouverte par les moyens de verrouillage. Ainsi, même en cas de choc violent, entraînant le passage du dispositif d'ouverture 24 dans sa position d'ouverture, le couvercle 8 pourra éventuellement passer de la position fermée à la position partiellement ouverte, mais ne pourra pas passer dans sa position ouverte du fait de la position de verrouillage des moyens de verrouillage 38.

Un organe d'actionnement 50 permet à l'utilisateur de faire passer les moyens de verrouillage 38 de la position de verrouillage à la position de déverrouillage. L'organe d'actionnement 50 est par exemple formé par une poignée formée d'une seule pièce avec l'élément de blocage 44 et montée en rotation sur le couvercle 8 autour de l'axe B sous le bord transversal arrière 24 du couvercle. La poignée s'étend entre la paroi interne 16 et la paroi externe 18 du couvercle 8 et est apte à faire tourner l'élément de blocage 44 vers sa position de déverrouillage. Ainsi, pour ouvrir le dispositif de rangement 1, l'utilisateur appuie sur l'organe 50 et soulève le couvercle 8 d'un même mouvement, comme représenté sur les Fig. 4 et 5. L'organe d'actionnement 50 est agencé entre le couvercle 8 et le corps de rangement 2 de façon à être invisible depuis l'extérieur du dispositif de rangement 1 lorsque le couvercle 8 est dans sa position fermée, comme représenté sur la Fig. 1. Dans cette position, le couvercle 8 masque l'organe d'actionnement 50. L'organe d'actionnement 50 est par exemple masqué par une partie de l'élément de garnissage s'étendant en arrière du bord transversal arrière 22 lorsque le couvercle 8 est en position fermée, comme représenté sur les figures.

L'organe d'actionnement 50 n'est ainsi accessible de l'extérieur du dispositif de rangement 1 que lorsque le couvercle 8 est dans la position partiellement ouverte, dans laquelle le couvercle 8 est légèrement soulevé, comme décrit ci-dessus et comme représenté sur les Fig. 3 et 4. On conserve ainsi l'aspect extérieur du dispositif de rangement 1 lorsque le couvercle est fermé puisque aucun organe d'actionnement n'est visible depuis l'extérieur du dispositif de rangement 1 dans cette position. Le dispositif de rangement 1 selon l'invention est donc particulièrement satisfaisant puisqu'il permet de conserver l'esthétisme offert par le dispositif d'ouverture 24 du type « push-push » tout en empêchant une ouverture involontaire du couvercle 8.

Un organe de rappel 52 est agencé pour rappeler l'élément de blocage 44 en position de verrouillage lorsque l'organe d'actionnement 50 n'est pas actionné. Cet organe de rappel 52 est formé par un ressort enroulé autour de l'axe de rotation B et comprend une première partie extrême 54 en appui sur une surface du couvercle 8 de sorte à ramener l'élément de blocage 44 en position de verrouillage. La rotation de l'organe d'actionnement 50 se fait donc à l'encontre de la force de rappel de l'organe de rappel 52 (Fig. 4) et celui-ci ramène l'élément de blocage 44 dans la position de verrouillage et l'organe d'actionnement 50 dans sa position initiale lorsque l'organe 50 n'est pas actionné par un utilisateur.

Le dispositif de rangement 1 comprend en outre au moins une pièce poussoir 56, disposée entre le couvercle 8 et le corps de rangement 2, montée mobile en translation dans un logement 58 de la paroi interne 16 du couvercle, selon un axe sensiblement perpendiculaire à la paroi interne 18 du couvercle 8. La pièce poussoir 56 est mobile entre une position rétractée (Fig. 1), dans laquelle la pièce poussoir 56 est rentrée dans le logement 58 et permet la fermeture du dispositif d'ouverture 24, et une position extraite (Fig. 3 à 6), dans laquelle la pièce poussoir sort du logement 58 et prend appui contre le fond 14 du corps de rangement 2, de sorte que lorsque le couvercle 8 est rabattu sur le corps de rangement 2, le couvercle 8 est maintenu dans la position partiellement ouverte. La pièce poussoir 56 est contrainte dans sa position extraite par un organe de poussée 60, mobile en rotation autour de l'axe B et agencé pour pousser sur la pièce poussoir 56 lors du passage de la position de fermeture à la position d'ouverture du dispositif d'ouverture 24. Selon un mode de réalisation, l'organe de poussée 60 est formé par une deuxième partie extrême de l'organe de rappel 52 qui appuie sur la pièce poussoir 56 de sorte à pousser celle-ci vers sa position extraite. L'avantage de la présence d'une telle pièce poussoir 56 est décrit dans le document FR-2 935 320. La pièce poussoir 56 permet de maintenir le couvercle 8 dans la position partiellement ouverte de sorte à rendre accessible l'organe d'actionnement 50, comme représenté sur les Fig. 3 et 4. La pièce poussoir 56 permet en outre d'indiquer à l'utilisateur si le couvercle 8 est correctement fermé. En effet, en position extraite, la pièce poussoir 56 crée un espace entre le bord arrière 22 du couvercle 8 et le bord arrière 12 du corps de rangement 2. Si l'utilisateur constate la présence de cet espace, cela lui indique que le dispositif d'ouverture 24 n'est pas dans sa position de fermeture, c'est-à-dire que le pion 26 n'est par correctement retenu par la pince 30, et que la position fermée du couvercle 8 n'est pas verrouillée. En outre, la pièce poussoir 56 offre une assistance à l'ouverture.

Selon le mode de réalisation représenté sur la Fig. 6, le dispositif de rangement 1 comprend en outre un élément d'obturation 62 saillant dans l'espace de rangement 4 entre le bord transversal avant 20 et la pièce poussoir 56. L'élément d'obturation 62 est agencé pour obturer le passage 36 vers l'espace de rangement 4 lorsque le couvercle 8 est en position partiellement ouverte. L'élément d'obturation 62 est par exemple réalisé par une saillie formée sur la paroi interne 16 du couvercle et s'étendant vers le fond 14 du corps de rangement 2. On évite ainsi tout risque de projection d'objets rangés dans l'espace de rangement 4 hors du dispositif de rangement 1 lorsque le couvercle 8 est dans la position partiellement ouverte.

L'ouverture et la fermeture du dispositif de rangement 1 se font de façon simple. Pour ouvrir le dispositif 1, un utilisateur appui sur le couvercle 8 au voisinage du bord transversal arrière 22 de celui-ci, par exemple vers le centre de ce bord transversal arrière 22. Le dispositif d'ouverture 24 passe alors de sa position de fermeture à sa position d'ouverture en libérant le pion 26 de la pince 30. L'organe de poussée 60, qui est contraint en position fermée du couvercle, agit sur la pièce poussoir 56 de sorte à la faire passer en position extraite. Le couvercle 8 passe alors en position partiellement ouverte (Fig. 3). L'organe d'actionnement 50 des moyens de verrouillage 38 est par exemple agencé sensiblement au centre du bord transversal arrière 22 du couvercle, de sorte que lorsque l'utilisateur a appuyé sur le centre de ce bord 22, sa main se trouve naturellement en regard de l'organe d'actionnement 50 lorsque le couvercle 8 passe en position partiellement ouverte. Dans la position partiellement ouverte, la tête 48 de l'élément de blocage 44 est retenue par le bord de l'ouverture 42 formant élément de retenue. L'utilisateur actionne alors l'organe d'actionnement 50 (Fig. 4) de sorte à faire passer les moyens de verrouillage 38 en position de déverrouillage, dans laquelle la tête 48 peut sortir de l'ouverture 42. L'utilisateur soulève ensuite le couvercle 8 de sorte à le faire passer dans sa position ouverte (Fig. 5). Des moyens de maintien du couvercle 8 en position ouverte peuvent être prévus de façon connue.

Pour fermer le dispositif, l'utilisateur appuie simplement sur le couvercle 8 de sorte à le rabattre sur le corps de rangement 2. Lorsque le couvercle 8 arrive en position partiellement ouverte, l'utilisateur continue d'appuyer sur le couvercle 8 de sorte à faire passer les moyens de verrouillage en position de verrouillage à l'encontre de l'organe de rappel élastique 52 et de sorte à faire passer la pièce poussoir 56 en position rétractée à l'encontre de l'organe de poussée 60. La tête 48 pénètre dans l'ouverture 42 et les moyens de verrouillage 38 repassent dans leur position de verrouillage sous l'effet de l'organe de rappel élastique 52. Le pion 26 exerce alors une pression sur la pince 30 de sorte à faire passer le dispositif d'ouverture en position de fermeture et à fermer le dispositif de rangement 1 (Fig. 1).

En cas de choc suffisamment important pour faire passer le dispositif d'ouverture dans sa position d'ouverture, le couvercle 8 ne pourra pas se soulever au-delà de sa position partiellement ouverte puisque les moyens de verrouillage restent dans leur position de verrouillage si l'organe d'actionnement 50 n'est pas actionné. La sécurité des passagers est ainsi garantie en empêchant les objets rangés dans l'espace de rangement d'être éjectés vers l'habitacle du véhicule lors du choc.

## Revendications

1. Dispositif de rangement (1) intérieur pour véhicule automobile, comprenant un corps de rangement (2), délimitant un espace de rangement (4) accessible au travers d'une ouverture (6), et un couvercle (8) mobile entre une position ouverte, dans laquelle l'espace de rangement (4) est accessible, et une position fermée, dans laquelle le couvercle (8) obture l'ouverture (6), en passant par une position partiellement ouverte dans laquelle le couvercle (8) est rabattu sur le corps de rangement (2) en laissant un passage (36) vers l'espace de rangement (4), ledit dispositif (1) comprenant un dispositif d'ouverture (24) mobile entre une position d'ouverture, dans laquelle le couvercle (8) est dans la position partiellement ouverte, et une position de fermeture, dans laquelle le couvercle (8) est maintenu dans sa position fermée, **caractérisé en ce que** le dispositif de rangement comprend en outre des moyens de verrouillage (38) mobiles entre une position de verrouillage, dans lesquels lesdits moyens de verrouillage (38) empêchent le passage du couvercle (8) de la position partiellement ouverte à la position ouverte, et une position de déverrouillage, dans laquelle les moyens de verrouillage (38) permettent le passage du couvercle (8) vers la position ouverte, un organe d'actionnement (50) permettant de faire passer lesdits moyens de verrouillage (38) de leur position de verrouillage à leur position de déverrouillage lorsque ledit organe d'actionnement (50) est actionné.

2. Dispositif de rangement selon la revendication 1, **caractérisé en ce que** les moyens de verrouillage (38) empêchent le passage du couvercle (8) de la position fermée à la position ouverte.

3. Dispositif de rangement selon la revendication 1 ou 2, **caractérisé en ce que** l'organe d'actionnement (50) s'étend entre le couvercle (8) et le corps de rangement (2) de sorte que ledit organe d'actionnement (50) est masqué par le couvercle (8) et inaccessible depuis l'extérieur du dispositif de rangement (1) lorsque le couvercle (8) est en position fermée et est accessible depuis l'extérieur du dispositif de rangement (1) lorsque le couvercle (8) est en position partiellement ouverte.

4. Dispositif de rangement selon l'une des revendications 1 à 3, **caractérisé en ce que** le dispositif d'ouverture (24) comprend un logement (28) disposé dans le couvercle (8) ou dans le corps de rangement (2), une pince (30) étant mobile en translation dans ledit logement (28) entre une position ouverte, dans laquelle les mors (32) de la pince (30) sont écartés, et une position fermée, dans laquelle les mors (32) de la pince (30) sont rapprochés, et un pion (26) solidaire respectivement du corps de rangement (2) ou du couvercle (8), le pion (26) étant retenu entre les mors (32) de la pince (30) dans la position fermée de ladite pince (30), le passage de la position fermée à la position ouverte et de la position ouverte à la position fermée de la pince (30) se faisant par pression du pion (26) sur la pince (30) de sorte à déplacer ladite pince (30) en translation dans le logement (28).

5. Dispositif de rangement selon l'une quelconque des revendications 1 à 4, **caractérisé en ce qu'**il comprend un organe de rappel élastique (52) agencé pour ramener les moyens de verrouillage (38) en position de verrouillage lorsque l'organe d'actionnement (50) n'est pas actionné.

6. Dispositif de rangement selon l'une quelconque des revendications 1 à 5, **caractérisé en ce qu'**il comprend en outre une pièce poussoir (56) disposée entre le couvercle (8) et le corps de rangement (2), ladite pièce (56) étant mobile entre une position rétractée et une position extraite dans laquelle la pièce poussoir (56) maintient le couvercle (8) dans la position partiellement ouverte.

7. Dispositif de rangement selon la revendication 6, **caractérisé en ce qu'**il comprend un organe de poussée (60) agencé pour pousser la pièce poussoir (56) vers sa position extraite lorsque le couvercle (8) passe de sa position fermée à sa position partiellement ouverte.

8. Dispositif de rangement selon la revendication 7 lorsqu'elle dépend de la revendication 5, **caractérisé en ce que** l'organe de rappel élastique (52) et l'organe de poussée (60) sont formés par une seule et même pièce élastiquement déformable.

9. Dispositif de rangement selon l'une quelconque des revendications 1 à 8, **caractérisé en ce que** les moyens de verrouillage (38) comprennent au moins un élément de retenue (40) solidaire du corps de rangement (2) et un élément de blocage (44) monté en rotation sur le couvercle (8), ledit élément de blocage (44) coopérant avec l'élément de retenue (40) en position de verrouillage et étant écarté dudit élément de retenue (40) en position de déverrouillage.

10. Dispositif de rangement selon les revendications 5 à 9, **caractérisé en ce que** l'organe de rappel (52) élastique est monté autour de l'axe de rotation (B) de l'élément de blocage (44) et comprend une première partie extrême (54) en appui sur une surface du couvercle (8) de sorte à ramener l'élément de blocage (44) en position de verrouillage et une deuxième partie extrême en appui sur la pièce poussoir (56) de sorte à pousser celle-ci vers sa position extraite.

11. Dispositif de rangement selon l'une quelconque des revendications 1 à 10, **caractérisé en ce qu'**il comprend un élément d'obturation (62) saillant dans l'espace de rangement (4), ledit élément d'obturation (62) étant agencé pour obturer le passage (36) vers l'espace de rangement (4) lorsque le couvercle (8) est dans la position partiellement ouverte.

## Patentansprüche

1. Innenraumverstauvorrichtung (1) für ein Kraftfahrzeug, aufweisend einen Verstaukörper (2), der einen Stauraum (4) begrenzt, der über eine Öffnung (6) zugänglich ist, und eine Abdeckung (8), die zwischen einer Öffnungsposition, in der der Stauraum (4) zugänglich ist, und einer Schließposition, in der die Abdeckung (8) die Öffnung (6) versperrt, bewegbar ist, wobei sie über eine Teilöffnungsposition verläuft, in der die Abdeckung (8) auf den Verstaukörper (2) heruntergeklappt ist, wobei ein Durchgang (36) zu dem Stauraum (4) freigelassen wird, wobei die Vorrichtung (1) eine Öffnungseinrichtung (24) aufweist, die zwischen einer Öffnungsposition, in der sich die Abdeckung (8) in der Teilöffnungsposition befindet, und einer Schließposition, in der die Abdeckung (8) in ihrer Schließposition gehalten wird, bewegbar ist, **dadurch gekennzeichnet, dass** die Verstauvorrichtung ferner aufweist: Verriegelungsmittel (38), die zwischen einer Verriegelungsposition, in der die Verriegelungsmittel (38) das Übergehen der Abdeckung (8) aus der Teilöffnungsposition in die Öffnungsposition verhindern, und einer Entriegelungsposition, in der die Verriegelungsmittel (38) das Übergehen der Abdeckung (8) in die Öffnungsposition zulassen, bewegbar sind, und ein Betätigungselement (50), das ein Bringen der Verriegelungsmittel (38) aus ihrer Verriegelungsposition in ihre Entriegelungsposition zulässt, wenn das Betätigungselement (50) betätigt wird.

2. Verstauvorrichtung gemäß Anspruch 1, **dadurch gekennzeichnet, dass** die Verriegelungsmittel (38) das Übergehen der Abdeckung (8) aus der Schließposition in die Öffnungsposition verhindern.

3. Verstauvorrichtung gemäß Anspruch 1 oder 2, **dadurch gekennzeichnet, dass** sich das Betätigungselement (50) zwischen der Abdeckung (8) und dem Verstaukörper (2) erstreckt, so dass das Betätigungselement (50) durch die Abdeckung (8) verdeckt und von außerhalb der Verstauvorrichtung (1) aus unzugänglich ist, wenn sich die Abdeckung (8) in der Schließposition befindet, und von außerhalb der Verstauvorrichtung (1) aus zugänglich ist, wenn sich die Abdeckung (8) in der Teilöffnungsposition befindet.

4. Verstauvorrichtung gemäß einem der Ansprüche 1 bis 3, **dadurch gekennzeichnet, dass** die Öffnungseinrichtung (24) aufweist: eine Aufnahme (28), die in der Abdeckung (8) oder in dem Verstaukörper (2) angeordnet ist, eine Klammer (30), die in der Aufnahme (28) zwischen einer Öffnungsposition, in der die Spannbacken (32) der Klammer (30) voneinander entfernt sind, und einer Schließposition, in der die Spannbacken (32) der Klammer (30) einander angenähert sind, in Translation bewegbar ist, und einen Zapfen (26), der jeweils mit dem Verstaukörper (2) oder der Abdeckung (8) fest verbunden ist, wobei der Zapfen (26) in der Schließposition der Klammer (30) zwischen den Spannbacken (32) der Klammer (30) gehalten wird, wobei das Übergehen der Klammer (30) aus der Schließposition in die Öffnungsposition und aus der Öffnungsposition in die Schließposition mittels Drucks des Zapfens (26) auf die Klammer (30) erfolgt, so dass die Klammer (30) in der Aufnahme (28) in Translation bewegt wird.

5. Verstauvorrichtung gemäß irgendeinem der Ansprüche 1 bis 4, **dadurch gekennzeichnet, dass** sie ein elastisches Rückstellelement (52) aufweist, das eingerichtet ist, die Verriegelungsmittel (38) in die Verriegelungsposition zurückzubringen, wenn das Betätigungselement (50) nicht betätigt wird.

6. Verstauvorrichtung gemäß irgendeinem der Ansprüche 1 bis 5, **dadurch gekennzeichnet, dass** sie ferner ein Druckstück (56) aufweist, das zwischen der Abdeckung (8) und dem Verstaukörper (2) angeordnet ist, wobei das Stück (56) zwischen einer Zurückziehposition und einer Ausziehposition bewegbar ist, in der das Druckstück (56) die Abdeckung (8) in der Teilöffnungsposition hält.

7. Verstauvorrichtung gemäß Anspruch 6, **dadurch gekennzeichnet, dass** sie ein Schiebeelement (60) aufweist, das eingerichtet ist, das Druckelement (56) in seine Ausziehposition zu drücken, wenn die Abdeckung (8) aus ihrer Schließposition in ihre Teilöffnungsposition übergeht.

8. Verstauvorrichtung gemäß Anspruch 7, wenn er von Anspruch 5 abhängt, **dadurch gekennzeichnet, dass** das elastische Rückstellelement (52) und das Schiebeelement (60) durch ein einziges und gleiches elastisch verformbares Stück ausgebildet sind.

9. Verstauvorrichtung gemäß irgendeinem der Ansprüche 1 bis 8, **dadurch gekennzeichnet, dass** die Verriegelungsmittel (38) aufweisen: mindestens ein Halteelement (40), das mit dem Verstaukörper (2) fest verbunden ist, und ein Blockierelement (44), das drehbar an der Abdeckung (8) montiert ist, wobei das Blockierelement (44) mit dem Halteelement (40) in der Verriegelungsposition zusammenwirkt und in der Entriegelungsposition von dem Halteelement (40) entfernt ist.

10. Verstauvorrichtung gemäß den Ansprüchen 5 bis 9, **dadurch gekennzeichnet, dass** das elastische Rückstellelement (52) um die Rotationsachse (B) des Blockierelements (44) herummontiert ist und aufweist: einen ersten äußersten Abschnitt (54), der gegen eine Fläche der Abdeckung (8) gestützt ist, so dass das Blockierelement (44) in die Verriegelungsposition zurückgebracht wird, und einen zweiten äußersten Abschnitt, der gegen das Druckstück (56) gestützt ist, um dieses in seine Ausziehposition zu drücken.

11. Verstauvorrichtung gemäß irgendeinem der Ansprüche 1 bis 10, **dadurch gekennzeichnet, dass** sie ein Verschlusselement (62) aufweist, das in den Stauraum (4) hineinragt, wobei das Verschlusselement (62) eingerichtet ist, den Durchgang (36) zu dem Stauraum (4) zu verschließen, wenn sich die Abdeckung (8) in der Teilöffnungsposition befindet.

## Claims

1. An interior storage device (1) for motor vehicle comprising a storage body (2), delimiting a storage space (4) accessible via an opening (6), and a door (8) mobile between an open position in which the storage space (4) is accessible, and a closed position in which the door (8) shuts the opening (6), passing through a partly opened position in which the door (8) is moved back against the storage body (2) leaving a passageway (36) towards the storage space (4), the said device (1) comprising an opening device (24) mobile between an open position in which the door (8) is in the partly opened position, and a closed position in which the door (8) is held in its closed position, **characterized in that** the storage device further comprises locking means (38) mobile between a locked position in which the said locking means (38) prevent the door (8) from moving from the partly opened position to the open position, and an unlocked position in which the locking means (38) allow the door (8) to move towards the open position, an actuating member (50) allowing the said locking means (38) to move from their locking position to their unlocking position when the said actuating member (50) is actuated.

2. The storage device according to claim 1, **characterized in that** the locking means (38) prevent the door (8) from moving from the closed position to the open position.

3. The storage device according to claim 1 or 2, **characterized in that** the actuating member (50) extends between the door (8) and the storage body (2) so that the said actuating member (50) is hidden by the door (8) and is inaccessible from outside the storage device (9) when the door (8) is in closed position, and is accessible from outside the storage device (1) when the door (8) is in partly opened position.

4. The storage device according to one of claims 1 to 3, **characterized in that** the opening device (24) comprises a housing (28) arranged in the door (8) or in the storage body (2), a clip (30) being mobile in translation inside said housing (28) between an open position in which the jaws (32) of the clip (30) are drawn apart and a closed position in which the jaws (32) of the clip (30) are drawn together, and a pin (2si) secured to the storage body (2) or door (8) respectively, the pin (26) being retained between the jaws (32) of the clip (30) in the closed position of the said clip (30), the changeover from the closed position to the open position and from the open position to the closed position of the clip (30) being obtained by pressure of the pin (26) on the clip (30) so as to move the said clip (30) in translation inside the housing (28).

5. The storage device according to any of claims 1 to 4, **characterized in that** it comprises an elastic return member (52) arranged to bring the locking means (38) back to the locking position when the actuating member (50) is not actuated.

6. The storage device according to any of claims 1 to 5, **characterized in that** it further comprises a push part (56) arranged between the door (8) and the storage body (2), the said part (56) being mobile between a retracted position and an extracted position in which the push part (56) holds the door (8) in the partly opened position.

7. The storage device according to claim 6, **characterized in that** it comprises a pushing member (60) arranged to push the push part (56) towards its extracted position when the door (8) moves from its closed position to its partly opened position.

8. The storage device according to claim 7 when it is dependent on claim 5, **characterized in that** the elastic return member (52) and the pushing member (60) are formed of one and the same elastically deformable part.

9. The storage device according to any of claims 1 to 8, **characterized in that** the locking means (38) comprise at least one retaining element (40) secured to the storage body (2) and a blocking element (44) mounted in rotation on the door (8), the said blocking element (44) cooperating with the retaining element (40) in locked position and being drawn away from the said retaining element (40) in unlocked position.

10. The storage device according to claims 5 to 9, **characterized in that** the elastic return member (52) is mounted about the axis of rotation (B) of the blocking element (44) and comprises a first end part (54) bearing on a surface of the door (8) so as to bring the blocking element (44) back to the locking position, and a second end part bearing on the push part (56) so as to push it towards its extracted position.

11. The storage device according to any of claims 1 to 10, **characterized in that** it comprises a shut-off element (62) projecting into the storage space (4), the said shut-off element (62) being arranged to shut off the passageway (36) towards the storage space (4) when the door (8) is in the partly opened position.
